# EUROPÄISCHE PATENTSCHRIFT

(11) **EP 0 874 692 B1**
(45) Veröffentlichungstag und Bekanntmachung des Hinweises auf die Patenterteilung: **17.12.2003**
(21) Anmeldenummer: 97935562.5
(22) Anmeldetag: 01.08.1997
(51) Int. Cl.: B03B 5/00, B01D 29/11, B01D 29/60, B01D 29/66, B01D 61/14

(54) **VERFAHREN ZUR NASS-FEINSTKORNKLASSIERUNG**
WET PROCESS FOR THE CLASSIFICATION OF SUPER FINES
PROCEDE DE CLASSIFICATION DE GRAINS TRES FINS PAR VOIE HUMIDE

(30) Priorität: 03.08.1996 DE 19631466
(43) Veröffentlichungstag der Anmeldung: 04.11.1998
(73) Patentinhaber: Kottke, Volker, 70771 Leinfelden-Echterdingen (DE); Klein, Gunnar-Marcel, 73235 Weilheim (DE)
(72) Erfinder: KLEIN, Gunnar-Marcel, D-73235 Weilheim (DE); KOTTKE, Volker, D-70771 Leinfelden-Echterdingen (DE)
(86) Internationale Anmeldenummer: EP9704212
(87) Internationale Veröffentlichungsnummer: WO98005429

(56) Entgegenhaltungen:
- WO-A-86/05116
- US-A- 5 525 144
- M. PAHL ET AL: "Membranfiltration mit und ohne Querstrom" AUFBEREITUNGS TECHNIK., Bd. 34, Nr. 2, - Februar 1993 WIESBADEN DE, Seiten 57-68, XP000350563
- H. GASPER: "Druckbetriebene Verfahren der industriellen Crossflow-Membrantechnik" CHEMIETECHNIK., Bd. 22, Nr. 2, Februar 1993, HEIDELBERG DE, Seiten 64-67, XP000345386

## Beschreibung

### Fachliche Einordnung / Anwendungsbereich

Die Erfindung betrifft ein Verfahren zur Naß - Feinstkornklassierung unterschiedlicher Suspensionen. Die Anwendungsbereiche des Verfahrens entsprechen denen anderer Naß - Feinstkomklassierapparate wie Dekantierzentrifugen, Abweiserad . Naßklassierer oder kleine Hydrozyklone. Es können jedoch auch Korngrößen des Feingutes erhalten werden, die mit bekannten Naß - Klassierverfahren bisher nicht erzielbar sind. Das Klassierverfahren kann als eigenständiges Verfahren für reine Klassieraufgaben oder kombiniert mit einer Naß - Mühle in einem Mahlkreislauf eingesetzt werden.

### Stand der Technik

Die Klassierung mit Trenngrenzen im Korngrößenbereich zwischen 3 µm und 10 µm ist bei der trockenen Pulveraufbereitung, auch großtechnisch, Stand der Technik. Vielfach müssen feinste Pulver aber auch in Naßverfahren hergestellt werden. Hier sind Klassierverfahren nur ganz vereinzelt im Einsatz und es dominieren die reinen Mahlverfahren. Der Grund hierfür liegt in der mangelnden Verfügbarkeit für den Bereich unter 10 µm. Die für Produktionszwecke einsetzbaren Naß- und Trockenklassierapparate (Windsichter) für den Feinstkombereich beruhen auf dem Prinzip der Trennung im Zentrifugalfeld. Derzeit sind folgende drei Naßklassierapparate verfügbar:
a) Der Hydrozyklon ist ein konstruktiv einfacher Apparat und erreicht Trenngrenzen von 5 µm bei Oberkomgrößen x₉₇ des Feingutes von 10 µm. Hierbei muß jedoch der Durchmesser des Hydrozyklons erheblich abgesenkt werden, was einen sehr geringen Durchsatz zur Folge hat.
b) Mit sehr schnell laufenden Dekantierzentrifungen werden Oberkomgrößen x₉₇ des Feingutes von 6 µm erzielt. Bei der Klassierung von Partikeln mit sehr hoher Dichtedifferenz zu Wasser können mit Dekantierzentrifungen auch Feingüter mit geringerer Oberkorngrenze erhalten werden.
c) Abweiserad - Naßklassierer erreichen Oberkorngrößen von 4 µm, das Feingut wird jedoch nur mit sehr hoher Verdünnung erhalten und der Feingutaustrag ist sehr gering.

Die bekannten Naß- und Trockenklassierapparate erzielen im Bereich der Feinstkornklassierung nur eine teilweise Auftrennung des Aufgabegutes. Das erhaltene Grobgut weist immer einen gewissen Anteil der Partikelfraktionen des Aufgabegutes mit den kleinsten Partikeldurchmessern auf. Ursachen hierfür sind Agglomerate die in das Grobgut gelangen, Spritzkorn, Wandeffekte z.B. bei Zyklonen oder eine nur teilweise Feingutausschleusung aus dem durch die Sichtzone tretenden Aufgabegut. Die Trennkurve (Trompsche Kurve) der Klassierung erreicht dann nicht den Wert Null. Der in das Grobgut gelangende Feingutstrom wird auch als "toter Fluß" bezeichnet. In Mühle-Klassierkreisläufen und bei anderen Klassieraufgaben, bei denen aus einem relativ wertlosen Aufgabegut ein Feingut als Wertprodukt gewonnen wird, ist auch der Einsatz von Klassierapparaten mit hohem toten Fluß sinnvoll. Der Abweiserad - Naßklassierer ist ein Beispiel für einen Apparat mit hohem toten Fluß.

Zur Herstellung und Verarbeitung qualitativ hochwertiger Produkte werden immer mehr Partikel benötigt, die mittlere Partikelgrößen bis hin zum sub - µm Bereich und sehr kleine Oberkorngrößen aufweisen. Hier sind die gewünschten Feinheiten in aller Regel mit einem Zerkleinerungsprozess allein nicht zu erreichen, so daß der Mühle ein Klassierorgan nachgeschaltet werden muß. Weiterhin ist es zur Herstellung von Produkten mit einer engen Partikelgrößenverteilung im Bereich z.B. unter 10 µm notwendig, den Feinstkomanteil z.B. um und unter 1 µm möglichst weitestgehend abzutrennen. Eine Absenkung der Oberkorngröße x₉₇ des Feingutes auf unter 4 µm wird bisher nur von einigen Trockenklassierern und bei sehr hohen Schleuderziffem erreicht. Diese Apparate sind konstruktiv relativ aufwendig und weisen bewegte Maschinenteile auf. Der Energiebedarf steigt dabei erheblich an und der Feingutaustrag nimmt deutlich ab. Mit Naß - Feinstklassierapparaten wurde eine Absenkung der Oberkorngröße x₉₇ des Feingutes unter 4 µm bisher nicht erreicht.

Der Zeitschriftenartikel von M. Pahl "Membranfiltration mit und ohne Querstrom" in der Zeitschrift Aufbereitungstechnik, Band 34, Nr. 2, Februar 1993 Wiesbaden, Seiten 57 - 68, zeigt, daß bei einer Querstromfiltration ein Klassiereffekt auftritt, sowie die Abhängigkeit dieses Klassiereffekts von dem Parameterfiltratfluß. Die zugrundeliegende technische Zielsetzung ist hierbei die Reinigung der Flüssigkeit bei möglichst langer Standzeit des Filters.

Es besteht daher die Aufgabe, ein Verfahren zur Naß-Feinstkornklassierung so weiterzubilden und eine entsprechende Vorrichtung bereitzustellen, mit welchem die Grenzpartikelgröße annähernd konstant gehalten, die Trennschärfe erhöht und der "tote Fluß" vermindert werden kann.

Gelöst wird diese Aufgabe mit den Merkmalen der Ansprüche 1 bzw. 16. Vorteilhafte Ausgestaltungen sind den jeweiligen Unteransprüchen entnehmbar.

Das erfindungsgemäße Klassierverfahren beruht auf der selektiven Ablagerung von kleineren Partikeln aus Suspensionen bei Überströmung von mikroporösen Filterflächen mit konstanter Strömungsgeschwindigkeit und Vorgabe eines konstanten Filtratfluß durch die mikroporöse Filterfläche. Das Feingut lagert sich dabei auf der mikroporösen Filterfläche ab und wird durch periodische Abreinigung gewonnen.

Die selektive Ablagerung von kleineren Partikeln ist ein bei der Querstrom - Filtration mit Membranmodulen bekannter und unerwünschter Effekt, der zu einem erheblichen Absinken des Filtratfluß mit der Filtrationszeit führt. Das erfindungsgemäße Verfahren nutzt diesen Effekt aus um eine Feinstkomklassierung zu erzielen, wobei der klassierende Ablagerungseffekt verstärkt wird, indem die Strömungsgeschwindigkeit der Suspension und der Filtratfluß durch die mikroporöse Filterfläche während der Querstrom - Filtration konstant gehalten werden. Hierbei wird neben einer Reduzierung der mittleren Korngröße insbesondere eine Reduzierung der Oberkomgröße des Feingutes gegenüber Partikelschichten erreicht, die sich bei der Querstromfiltration mit konstanter transmembraner Druckdifferenz ablagern.

Das erfindungsgemäße Verfahren besteht aus zwei Verfahrensabschnitten:

### 1. Verfahrensabschnitt

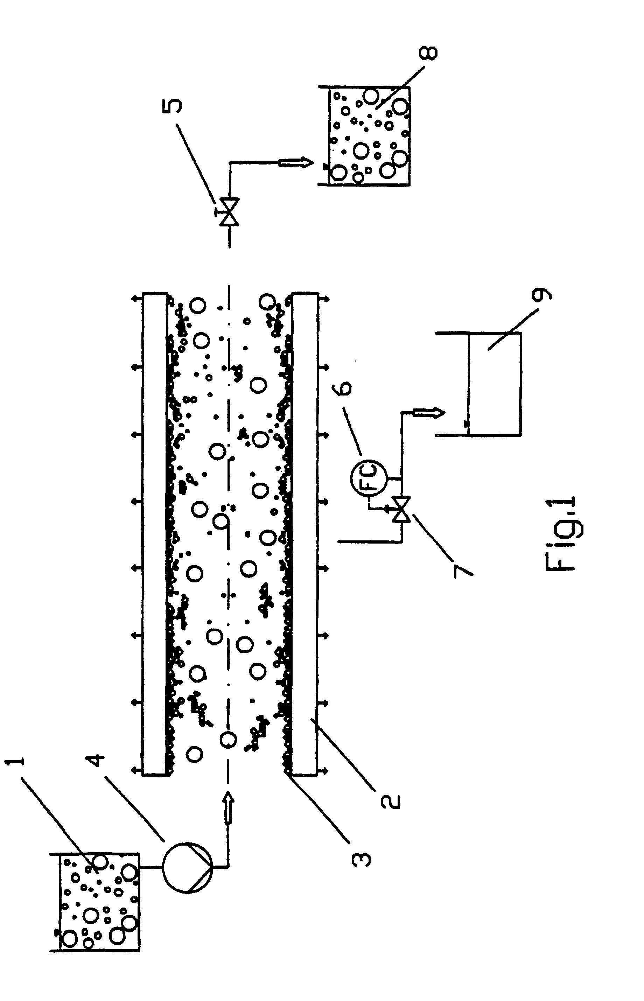

Der erste Verfahrensabschnitt ist in Fig.1 schematisch dargestellt. Die zu klassierende Suspension (Aufgabegut) 1 durchtritt ein Querstromfiltrationsmodul 2 mit rückspülbaren, mikroporösen Filterflächen und wird bei Vorgabe einer konstanten Strömungsgeschwindigkeit im Modul und bei Vorgabe eines konstanten Filtratfluß durch die mikroporösen Filterflächen filtriert. Das Feingut 3 scheidet sich dabei auf den mikroporösen Filterflächen als Partikelschicht ab. Der Filtrationsdruck wird durch eine Pumpe 4 und ein Druckhalteventil 5 eingestellt. Der Filtratfluß wird über einen Durchflußmesser 6 als lstwertgeber und ein Regelventil 7 eingestellt. Zur Einstellung der Parameter Filtrationsdruck, Überströmgeschwindigkeit und Filtratfluß sind auch andere Anordungen, die z.T. an späterer Stelle erläutert werden möglich.

In Fig.1 ist zur Veranschaulichung des Klassiereffektes die einmalige Durchströmung eines Moduls dargestellt. Die Suspension tritt aus dem Modul aus und wird nicht zurückgeführt. Die austretende Suspension ist das Grobgut 8. Das durch die Partikelschicht und die mikroporöse Filterfläche tretende Filtrat 9 wird hier ebenfalls nicht zurückgeführt. Das Aufgabegut wird in dem nach Fig.1 dargestellten Verfahren nur teilweise klassiert, d.h. es gelangen auch kleine Partikeltraktionen in das Grobgut (Klassierung mit totem Fluß). Der tote Fluß kann durch geeignete Schaltungen von Querstromfiltrationsmodulen minimiert werden. Zur Vermeidung einer Aufkonzentrierung der einmalig oder mehrfach durch das Querstromfiltrationsmodul strömenden Suspension muß bei diesen Verfahren austretendes Filtrat vollständig oder teilweise dem Suspensionsstrom zurückgeführt werden. Diese Schaltungen von Modulen zu Gesamtverfahren sind z.T. Bestandteil der Unteranspüche und werden z.T. als Ausführungsbeispiele anhand Verfahrensfließbildern erläutert.

Durch Vorgabe der Parameter Überströmgeschwindigkeit und Filtratfluß (Absaugung) kann die Korngrößenverteilung des Feingutes gezielt eingestellt werden. Die mittlere Korngröße des Feingutes nimmt mit steigender Überströmgschwindigkeit und vermindertem Filtratfluß ab. Die Konstanthaltung des Filtratfluß kann durch Drosselung des Filtratstroms mit einem Regelventil oder durch kontinuierliche Erhöhung des Filtrationsdrucks durchgeführt werden. Der Filtratfluß kann auch konstant gehalten werden, indem das Filtrat mit Pumpen mit konstantem Fördervolumenstrom abgezogen wird. Hierbei kann der 1. Verfahrensabschnitt auch mit geringem Überdruck oder Unterdruck im Modul durchgeführt werden.

Abweichend von einer Konstanthaltung der Strömungsgeschwindigkeit und des Filtratfluß über der gesamten Filterfläche und während der gesamten Ablagerungszeit kann der erste Verfahrensabschnitt auch bei Einstellung eines weitgehend konstanten Volumenstroms der Suspensionsströmung und eines weitgehend konstanten Filtratfluß oder bei Einstellung einer Untergrenze des Volumenstroms der Suspensionsströmung und einer Obergrenze des Filtratfluß durchgeführt werden. Die nachstehenden Beispiele verdeutlichen die Bandbreite möglicher Einstellungen der Parameter Überströmgeschwindigkeit und Filtratfluß im ersten Verfahrensabschnitt und den Einfluß dieser Einstellungen auf die Trennschärfe der Klassierung.
a) Die maximale Trennschärfe der Klassierung und somit die geringste Oberkomgröße des sich an der mikroporösen Filterfläche ablagemden Feingutes wird bei Vorgabe örtlich und zeitlich konstanter Geschwindigkeitsgradienten an der Oberfläche der aufwachsenden Partikelschicht und der Vorgabe eines örtlich und zeitlich konstanten Filtratfluß erhalten. Zur örtlichen und zeitlichen Konstanthaltung der Geschwindigkeitsgradienten bzw. der Wandschubspannung wird bevorzugt in einem Rohrmodul, das durch Vorschaltung eines hydrodynamischen Einlaufs (gerades Strömungsrohr mit Querschnitt des Rohrmoduls) von einer hydrodynamisch eingelaufenen Suspensionsströmung durchtreten wird, der Volumenstrom der Suspensionsströmung kontinuierlich mit zunehmender Deckschichtbildung vermindert. Die Konstanthattung des Filtratfluß über der gesamten Filterfläche trotz abnehmendem Überdrucks der Suspension mit zunehmender Lauflänge im Filtrationsmodul kann z.B. durch Gleichstromführung des Filtrates, wobei der Druckverlust der Strömung im Filtratraum dem Druckverlust der Suspensionsströmung entspricht, oder durch Segmentierung der mikroporösen Filterfläche und separater Filtratflußregelung für jedes Segment erzielt werden.
b) Bei der technischen Umsetzung des Klassierverfahrens genügt zur Erzielung eines sehr geringen Oberkorns des Feingutes in vielen Fällen die Vorgabe eines weitgehend konstanten Volumenstroms der Suspensionsströmung, wobei die Deckschichthöhe klein gegenüber der Kanalhöhe oder dem Durchmesser des Moduls sein sollte, und die Vorgabe eines zeitlich weitgehend konstanten Filtratflusses, wobei der Druckverlust bei Durchströmen des Filtrationsmoduls klein gegenüber der transmembranen Druckdifferenz sein sollte.
c) Bei geringeren Anforderungen an die Trennschärfe genügt es den Volumenstrom der Suspensionsströmung oberhalb einer Grenze und den Filtratfluß unterhalb einer Grenze einzustellen.

### 2. Verfahrensabschnitt

Im zweiten Verfahrensabschnitt wird nach Unterbrechung des Suspensionsstroms, z.B. durch Umgehung des Moduls durch einen Bypass, das auf der Filterfläche abgelagerte Feingut aus dem Modul ausgetragen. Das Feingut kann mit Flüssigkeit als Suspension oder ohne Flüssigkeit als feuchter Filterkuchen aus dem Modul ausgetragen werden.

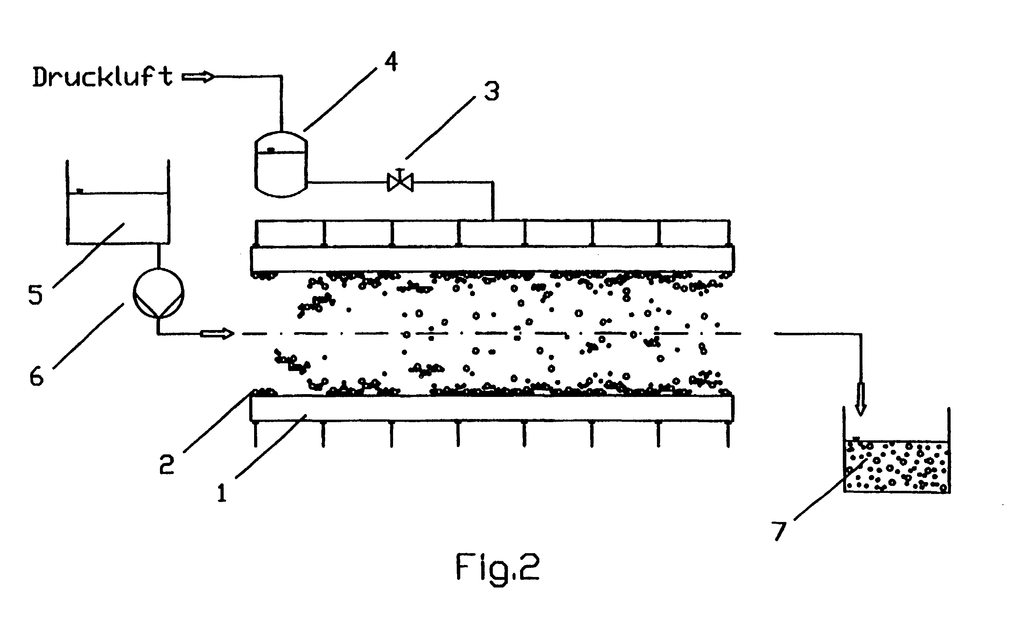

In Fig.2 ist schematisch der Austrag des Feingutes mit Flüssigkeit dargestellt. Das an den mikroporösen Filterflächen des rückspülbaren Querstrom - Filtrationsmoduls 1 abgelagerte Feingut 2 wird durch Aufgabe eines kurzen Rückspülimpulses (Öffnen des Ventils 3 zum Rückspülbehälter 4) abgesprengt und durch gleichzeitige Überspülung mit Klarwasser oder anderer Flüssigkeit (Behälter 5 und Pumpe 6) aus dem Modul ausgetragen und in einem Behälter 7 gesammelt.

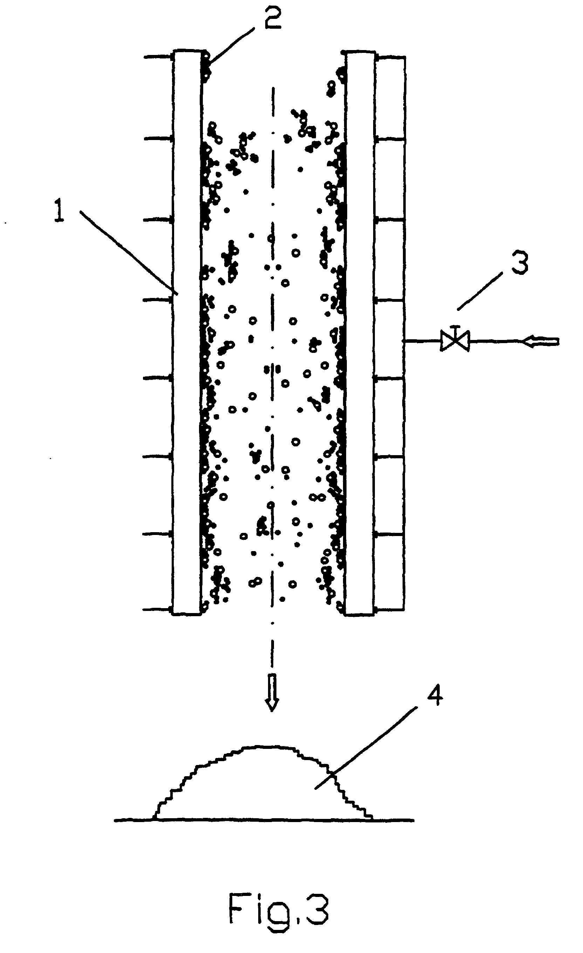

In Fig.3 ist schematisch der Austrag des Feingutes als feuchter Filterkuchen dargestellt. Das an den mikroporösen Filterflächen des rückspütbaren Querstrom - Filtrationsmoduls 1, bevorzugt Flachspaltmodute mit größerem Spaltabstand, abgelagerte Feingut 2 wird durch Aufgabe eines kurzen Druckluft- oder Gasrückspülimpuises, durch Öffnen des Ventils 3, abgesprengt und fällt aus dem Modul nach unten aus 4, gegebenenfalls unterstützt durch Rüttel- oder Schabeeinrichtungen oder durch von oben mit einem Gebläse zugeführte Spülluft. Für den diskontinuierlichen trockenen Austrag des Feingutes muß an der Unterseite des vertikal angeordneten Moduls eine geeignete druckdicht verschließbare Öffnungsvorrichtung vorgesehen werden.

### Weitere Ausgestaltungen des erfindungsgemäßen Verfahrens

Bei dem oben beschriebenen, aus zwei Verfahrensabschnitten bestehenden erfindungsgernäßen Verfahren handelt es sich um eine unvollständige Klassierung. Die Ablagerungsgeschwindigkeit des Feingutes auf der Filterfläche strebt bei gegen Null gehendem Massenanteil der kleinsten Partikel in der über die Filterfläche strömenden Suspension ebenfalls gegen Null. Bei der Produktion und Verarbeitung von feinsten Partikeln werden unterschiedliche Zielrichtungen verfolgt: Zum einen sollen sehr feine Partikel gewonnen werden, zum anderen soll aus einem Wertprodukt der Feinstanteil möglichst vollständig entfernt werden, in einem dritten Fall werden Partikel mit einer sehr steilen Partikelorößenverteilung benötigt. Das erfindungsgemäße Verfahren kann entsprechend der unterschiedlichen Zielrichtungen bei der Feinstkomklassierung unterschiedlich ausgestaltet werden. Diese Ausgestaltungen sind auch Bestandteil der Unteransprüche:
a) Feingutgewinnung mit unvollständiger Feingutausbringung z.B. Gewinnung feinster Partikel als Wertprodukt aus relativ wertlosen Ausgangsstoffen. Die unvollständige Klassierung kann z.B. in Mühle - Sichter - Kreisläufen angewendet werden. In naß betriebenen Mühle - Sichter - Kreisläufen im Feinstbereich ist auch bei Klassierung mit hohem toten Fluß die Produktion qualitativ besserer Feingüter im Vergleich zur Mühlen - Passagenfahrweise möglich.
b) Grobgutgewinnung durch weitestgehende Feingutausbringung bzw. Feingutgewinnung bei sehr geringem toten Fluß durch Reihenschaltung oder Kaskadenschaltung mehrerer Module und/oder Mehrfachüberströmung in einem Umwälzkreislauf und/oder weitergehender Klassierung des Grobgutes (siehe auch nachstehende Ausführungsbeispiele).
c) Verfanrenskombination zur Gewinnung von Fraktionen mit steiler Korngrößenverteilung aus einem Aufgabegut. Zunächst wird mit dem Verfahren a) Feingut hergestellt, das dann als Aufgabegut mit Verfahren b) und verminderter Trenngrenze, durch Erhöhung der Strömungsgeschwindigkeit der Suspension und/oder Verminderung des Filtratfluß, erneut klassiert wird. Das erhaltene Grobgut ist das Produkt mit steiler Korngrößenverteilung.
d) Kombination von Klassierung und Entwässerung. Bei nicht vollständiger Rückführung oes Filtrates in den Suspensionsstrom während des ersten Verfahrensabschnitts kann die Konzentration des austretenden Grobgutes bis zur Grenze der Förderbarkeit erhöht werden.
e) Kombination von Klassierung und Waschprozess. Das abgelagerte Feingut kann vor dem Austrag (2. Verfahrensabschnitt) durch Filtration mit Waschflüssigkeit gereinigt werden.

### Gewerbliche Anwendungen

Beispielhafte gewerbliche Anwendungsgebiete der Erfindung sind die Herstellung von Partikeln mit mittleren Korngrößen (x₅₀) über und unterhalb 1 µm sowie kleinen Oberkomgrößen x₉₇ und die Herstellung von Partikeln mit steiler Partikelgrößenverteilung. Produktbeispiele hierfür sind: Feinstkaoline für die Papierindustrie, Pigmente für Lacke und Farben, Keramikfarben, Sinterkömer für die Hochleistungskeramik und Pulvermetallurgie, Kunststoffe, Füllstoffe z.B. für Polymerverbunde, Schleifmittel, Tonerpartikel, Datenträgerbeschichtungen (Filme, Magnetbänder), Herstellung von großflächigen Flüssigkristallen, Herstellung feindisperser Reaktanden mit steiler KorngröBenverteilung für homogene chemische Reaktionen, Katalysatoren mit großer spezifischer Oberfläche und steiler Korngrößenverteilung, Pflanzenschutzmittel, pharmazeutische Wirkstoffe und Partikel mit sehr enger Korngrößenverteilung für chromatographische Verfahren.

### Vorteile der Erfindung gegenüber bisherigen Verfahren

Die mittlere und Oberkorngröße der mit dem erfindungsgemäßen Verfahren herstellbaren Feingüter sind deutlich kleiner als die entsprechenden Korngrößen der mit z.Z. bekannten Naß - Feinstklassierapparaten herstellbaren Feingüter. Die Trenngrenzen des Klassierverfahrens und die Korngrößen der herstellbaren Feingüter liegen im Bereich der besten Trocken - Feinstklassierapparate wie Abweiseradwindsichter, Umlenkwindsichter und virtuelle lmpaktoren, die bisher nur im Labormaßstab oder mit geringen Auígabegut - Durchsätzen und sehr hohem spezifischen Energieeintrag betrieben werden können.

Der Energiebedarf des erfindungsgemäßen Klassierverfahrens ist erheblich geringer als bei bekannten Apparaten, da hier zur Klassierung keine hohen Schleuderziffem bzw. Fluidgeschwindigkeiten benötigt werden. Bei Verwendung von Querstrom Filtrationsmodulen mit genügend großer Membranfläche, übersteigt der mit dem erfindungsgemäßen Verfahren erzielbare Feingutmassenstrom die mit bisherigen Feinstklassierapparaten erzielten Feingut - Durchsätze. Die für das erfindungsgemäße Verfahren benötigten rückspülbaren Querstrom - Filtrationsmodule (insbesondere Rohrmodule, Multikanalmodule oder Plattenmodule) sind Stand der Technik und auch mit sehr großen Filterflächen verfügbar.

Im Gegensatz zu bisherigen Klassierapparaten ist der Klassiereffekt unabhängig von der Dichtedifferenz zwischen Partikel und Trägerfluid, so daß die Möglichkeit der Klassierung von Partikeln mit geringer Dichtedifferenz zu Wasser besteht. Durch die im Vergleich zu bisherigen Feinstklassierapparaten geringe Scherbeanspruchung der zu klassierenden Partikel können auch scherempfindliche Partikel klassiert werden. Im Vergleich zu der überwiegenden Mehrzahl der bekannten Feinstklassierapparate ist der konstruktive Aufwand gering, da keine rotierenden Maschinenteile benötigt werden. Ebenso entfallen die Probleme starker Erosion bei Windsichtem.

### Ausführungswege des erfindungsgemäßen Verfahrens

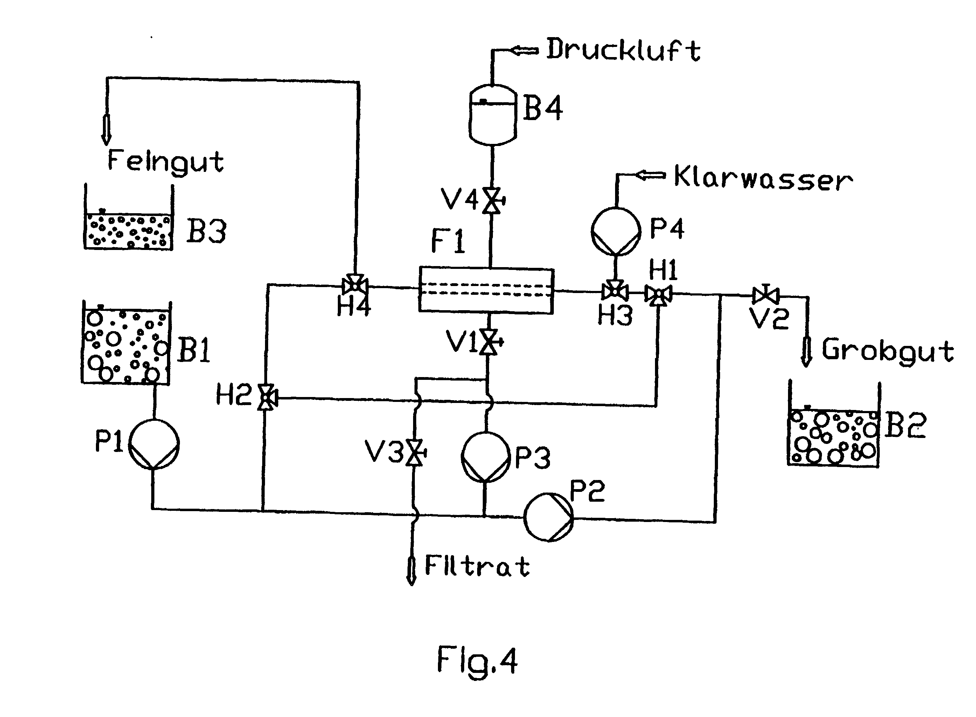

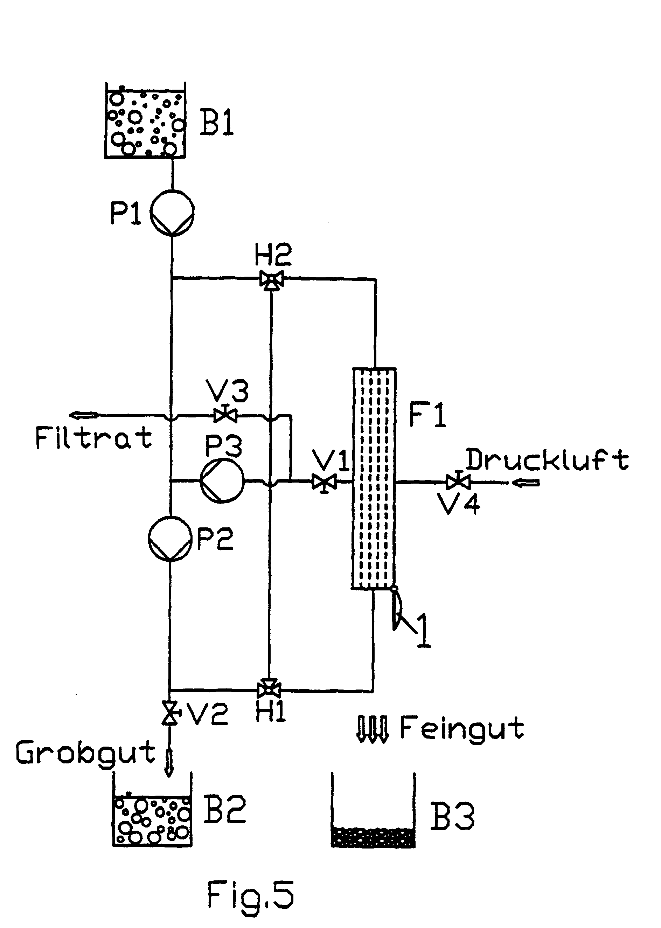

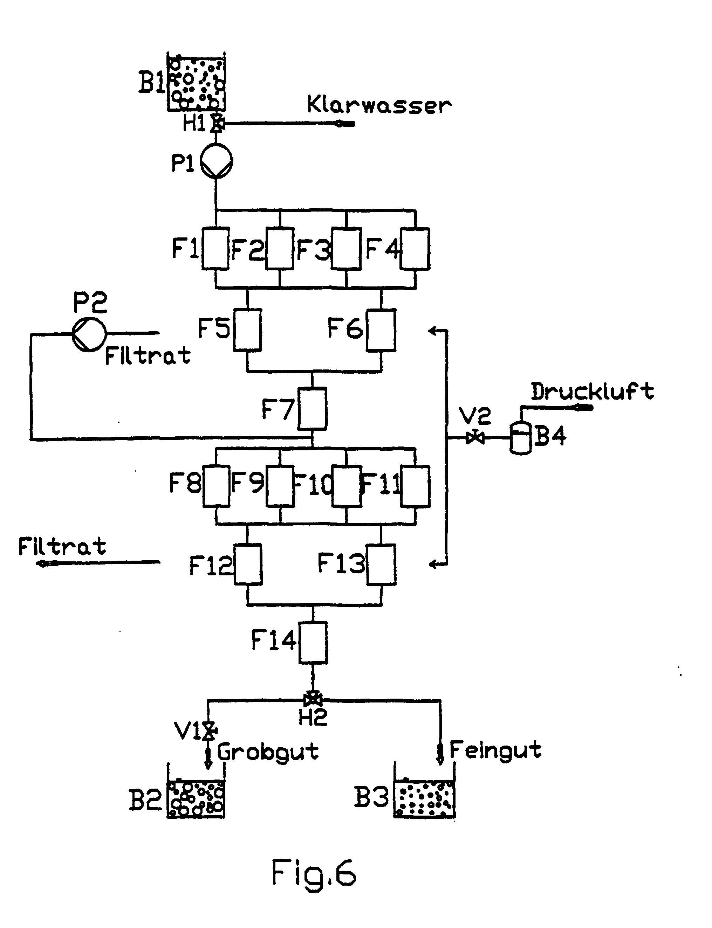

Als Ausführungswege des erfindungsgemäßen Verfahrens werden beispielhaft vier Anordnungen von Filtermodulen zu Gesamtverfahren, die auch Bestandteil der Unteransprüche sind dargestellt:
a) Kreislaufschaltung eines Membranmoduls und Naßaustrag des Feingutes. Das Verfahrensschema ist in Fig.4 dargestellt. Das Aufgabegut wird von dem Behälter B1 kontinuierlich mit die Pumpe P1 zugeführt. Die Suspension wird mittels der Pumpe P2 in einem Kreislauf durch das rückspülbare Querstrom -Filtrationsmodul F1 (auch mehrere Module in Reihen- oder Parallelschaltung oder in Kaskaden angeordnete Module) umgewälzt. Der Filtratstrom wird über das Stellventil V1 konstant gehalten. Der Filtratstrom wird während des ersten Verfahrensabschnittes dem Suspensionskreislauf über die Pumpe P3 vollständig oder teilweise (V3) zugeführt. Das Grobgut wird über das Ventil V2 (Druckhalteventil) aus dem Kreislauf ausgeschleust. Nach Beendigung des 1. Verfahrensabschnittes wird der Suspensionsstrom durch Umschalten der Hähne H1 und H2 im Bypass geführt. Durch Umschalten der Hähne H3 und H4 wird Klarwasser zugeführt wobei die Feingutsuspension bei gleichzeitiger Aufgabe eines kurzen Filtrat-Rückspülimpuls durch Öffnen des Ventils V4 gewonnen wird. Nach Beendigung des Feingutaustrags wird das Modul wieder auf die Strömungsführung des 1. Verfahrensabschnittes umgestellt.
b) Kreislaufschaltung eines Membranmoduls und Austrag des Feingutes als feuchter Filterkuchen. Das Verfahrensschema ist in Fig.5 dargestellt. Der 1. Verfahrensabschnitt wird wie unter a) beschrieben durchgeführt. Nach Beendigung des 1. Verfahrensabschnittes wird der Suspensionsstrom durch Umschalten der Hähne H1 und H2 im Bypass geführt. Das Modul F1 mit vertikal angeordneten rückspülbaren mikroporösen Filterflächen wird an der Unterseite durch eine geeignete Vorrichtung 1 (automatische Klappe o.ä.) geöffnet, so daß die im Modul stehende Suspension ablaufen kann. Der an den vertikalen Filterflächen haftende feuchte Filterkuchen wird durch Druckluft oder Gasrückspülung (V4) abgesprengt und fällt aus dem Modul nach unten aus, gegebenenfalls unterstützt durch Rüttel- oder Schabeeinrichtungen oder durch von oben mit einem Gebläse zugeführte Spülluft.. Nach Beendigung des Feingutaustrags wird das Modul an der Unterseite wieder verschlossen und auf die Strömungsführung des 1. Verfahrensabschnittes umgestellt.
c) Kaskadenschaltung mehrerer Module und Naßaustrag des Feingutes. Das Verfahrensschema ist in Fig.6 dargestellt. Die Kaskadierung von Querstrom-Filtrationsmodulen (dargestellt sind zwei dreistufige Kaskaden aus je 7 Modulen) wird durchgeführt, um die Überströmgeschwindigkeit in den Modulen bei Flüssigkeitsverlust durch den Filtratabzug auch ohne Zuführung von Filtrat vor jedem Modul weitgehend konstant zu halten. Es können mehrere Kaskaden hintereinander geschaltet werden, wobei vor Eintritt in eine nachgeschaltete Kaskade dem Suspensionsstrom Filtrat oder Flüssigkeit zugeführt werden kann (P2). Wird vor der zuletzt angeordneten Kaskade kein oder nur wenig Filtrat oder Flüssigkeit zugeführt, kann die austretende Suspension (Grobgut) mit sehr hoher Konzentration gewonnen werden. Das im Behälter B1 vorgelegte Aufgabegut wird von der Pumpe P1 durch die Kaskade gefördert. Das Druckhalteventil V1 dient zur Aufrechterhaltung des Filtrationsdrucks. Der Filtratstrom in den einzelnen Modulen wird über Stellventile konstant gehalten. Nach Beendigung des 1. Verfahrensabschnittes wird die Suspensionszufuhr durch Umschalten von H1 unterbrochen und auf Zufuhr von Klarwasser umgestellt. Gleichzeitig wird ein kurzer Filtrat - Rückspülimpuls durch Öffnen des Ventils V2 aufgegeben und das Feingut durch Umschaltung von H2 ausgetragen. Nach Beendigung des Feingutaustrags wird das Modul wieder auf die Strömungsführung des 1. Verfahrensabschnittes umgestellt.
d) Kreislaufschaltung eines oder mehrerer Module mit nachgeschalteter Klassierung des Grobgutes durch Kombination aus dem Verfahren a) oder b) und dem Verfahren c). Die Kreislaufschaltung entspricht dem Verfahren a) oder b). Der aus dem Kreislauf austretende Grobgutstrom wird dem nachgeschalteten Verfahren c) als Aufgabegut zugeführt. Hierbei ergibt sich eine Klassierung mit sehr hoher Feingutausbringung bzw. niedrigem toten Fluß.

## Patentansprüche

1. Verfahren zur Naß-Klassierung von Partikeln im Feinstbereich, wobei in einem ersten Verfahrensabschnitt das Feingut bei einer Filtration der zu klassierenden Suspension (1) mit einem Querstrom-Filtrationsmodul (2) unter Einstellung einer Untergrenze der Strömungsgeschwindigkeit (4, 5) der Suspension (1 ) im Querstrom-Filtrationsmodul (2) und einer Obergrenze des Filtratflusses (6, 7) als Partikelschicht (3) auf den mikroporösen Filterflächen des Querstrom-Filtrationsmoduls (2) abgelagert wird und im zweiten Verfahrensabschnitt die abgelagerte Partikelschicht (3) durch trockene oder nasse Abreinigung als Feingutprodukt gewonnen wird,
wobei
im ersten Verfahrensabschnitt das Feingut unter Einstellung einer annähernd konstanten Strömungsgeschwindigkeit (4, 5) der Suspension (1) im Querstrom-Filtrationsmodul (2) abgelagert wird und **dadurch gekennzeichnet, daß** im ersten Verfahrensabschnitt das Feingut unter Einstellung eines annähernd konstanten Filtratflusses (6, 7) abgelagert wird.

2. Verfahren nach Anspruch 1,
**dadurch gekennzeichnet,**
**daß** die Strömungsgeschwindigkeit der Suspension (1) im Modul (2) indirekt durch die Einstellung des Volumenstromes (4, 5) eingestellt wird.

3. Verfahren nach einem der voranstehenden der Ansprüche,
**dadurch gekennzeichnet,**
**daß** abgelagertes Feingut (2) nach Unterbrechung des Suspensionsstroms im zweiten Verfahrensabschnitt durch Rückspülung (3, 4) mit Filtrat oder Flüssigkeit von den mikroporösen Filterflächen eines rückspülbaren Querstrom - Filtrationsmoduls (1) abgesprengt wird und die Feingutsuspension (7) mit Filtrat oder anderer Flüssigkeit (5) ausgetragen wird.

4. Verfahren nach einem der Ansprüche 1 bis 2,
**dadurch gekennzeichnet,**
**daß** abgelagertes Feingut (2) nach Unterbrechung des Suspensionsstroms und Entleerung der Suspension aus dem Querstrom-Filtrationsmodul (1) im zweiten Verfahrensabschnitt, durch Rückspülung (3) mit Druckluft oder Gas von vertikal angeordneten mikroporösen Filterflächen eines rückspülbaren Querstrom-Filtrationsmoduls (1) abgesprengt wird und die abgesprengte Partikelschicht, gegebenenfalls unterstützt durch Hilfsvorrichtungen, aus dem Modul nach unten ausfällt (4) oder trocken aus dem Modul ausgetragen wird.

5. Verfahren nach einem der Ansprüche 3 oder 4,
**dadurch gekennzeichnet,**
**daß** im ersten Verfahrensabschnitt die Suspension durch Umwälzung in einem Kreislauf eines oder mehrere Querstrom - Filtrationsmodule mehrfach durchströmt, wobei dem Suspensionskreislauf kontinuierlich Aufgabegut zugeführt und kontinuierlich Grobgut abgeführt wird, und anfallendes Filtrat oder andere Flüssigkeit dem Suspensionsstrom vollständig oder teilweise zugeführt wird, und daß im zweiten Verfahrensabschnitt nach Unterbrechnung des Suspensionsstroms durch Umleitung in einem Bypass das Feingutprodukt gewonnen wird.

6. Verfahren nacheinem der Ansprüche 3 oder 4,
**dadurch gekennzeichnet,**
**daß** mehrere Querstrom - Filtrationsmodule, insbesondere Module mit geringem Druckverlust bei Durchströmung und separater Regelung zur Konstanthaltung des Filtratflusses, hintereinander geschaltet sind und im ersten Verfahrensabschnitt von der Suspension einmalig oder mehrfach in einem Kreislauf durchströmt wird, wobei dem Suspensionskreislauf kontinuierlich Aufgabegut zugeführt und kontinuierlich Grobgut abgeführt wird, und anfallendes Filtrat oder andere Flüssigkeit dem Suspensionsstrom vollständig oder teilweise zugeführt wird.

7. Verfahren nach Anspruch 6,
**dadurch gekennzeichnet,**
**daß** die Strömungsgeschwindigkeit in den Modulen auch bei Filtratabzug durch Verringerung der Zahl der Strömungskanäle in den hintereinander geschalteten Modulen, oder des Querschnitts der Strömungskanäle konstant gehalten wird.

8. Verfahren nacheinem der Ansprüche 3 oder 4,
**dadurch gekennzeichnet,**
**daß** mehrere Querstrom - Filtrationsmodule, insbesondere Module mit geringem Druckverlust bei Durchströmung und separater Regelung zur Konstanthaltung des Filtratflusses, zu einer oder mehreren Kaskaden hintereinander geschaltet sind, wobei die Strömungsgeschwindigkeit in den Modulen durch die Kaskadierung nahezu konstant gehalten wird, und im ersten Verfahrensabschnitt von der Suspension einmalig oder mehrfach in einem Kreislauf durchströmt werden, wobei dem Suspensionskreislauf kontinuierlich Aufgabegut zugeführt und kontinuierlich Grobgut abgeführt wird, und anfallendes Filtrat oder andere Flüssigkeit dem Suspensionsstrom vollständig oder teilweise zugeführt wird.

9. Verfahren nach einem der voranstehenden Ansprüche,
**dadurch gekennzeichnet,**
**daß** eine Feingutfraktion nur unvollständig von einem Aufgabegut abgetrennt wird und/oder die Feingutgewinnung bei unvollständiger Klassierung des Aufgabegutes als Klassierverfahren in einem Mühle - Klassierkreislauf angewendet wird.

10. Verfahren nach einem der voranstehenden Ansprüche,
**dadurch gekennzeichnet,**
**daß** eine Grobgutfraktion aus einem Aufgabegut durch vollständige oder nahezu vollständige Feingutabtrennung gewonnen wird.

11. Verfahren nach Anspruch 9,
**dadurch gekennzeichnet,**
**daß** zuerst ein Feingut gewonnen wird und dieses Feingut dann erneut mit verminderter Trenngrenze, d.h. mit erhöhter Strömungsgeschwindigkeit der Suspension im Modul oder vermindertem Filtratfluß klassiert wird, um Produkte mit enger Korngrößenverteilung aus einem Aufgabegut herzustellen.

12. Verfahren nach einem der voranstehenden Ansprüche,
**dadurch gekennzeichnet,**
**daß** der austretende Grobgut-Suspensionsstrom während der Klassierung im ersten Verfahrensabschnitt aufkonzentriert wird, indem der Filtratstrom nicht oder nur teilweise zurückgeführt wird.

13. Verfahren nach einem der voranstehenden Ansprüche,
**dadurch gekennzeichnet,**
**daß** die abgelagerte Feingut-Partikelschicht vor Beginn des zweiten Verfahrensabschnitts mit einer Waschflüssigkeit gewaschen wird.

14. Verfahren nach einem der voranstehenden Ansprüche,
**dadurch gekennzeichnet,**
**daß** die für die Feingutablagerung benötigte Überströmung der mikroporösen Filterfläche in dynamischen Querstrom-Filtrationsmodulen mit bewegten Maschinenteilen durchgeführt wird.

15. Verfahren nach einem der voranstehenden Ansprüche,
**dadurch gekennzeichnet,**
**daß** in dem oder den für die Klassierung verwendeten Querstrom-Filtrationsmodulen Membranen für die Nanofiltration oder Membranen für die Ultrafiltration oder Membranen für die Mikrofiltration oder Filtermedien für die Feinfiltration eingebaut sind.

16. Vorrichtung zur Durchführung eines Verfahrens nach einem der voranstehenden Ansprüche, mit einem Querstrom-Filtrationsmodul (2), Mitteln (4, 5) zum Zuführen einer zu klassierenden Suspension (1) zu dem Querstrom-Filtrationsmodul (2) und zum Abführen der das Grobgut enthaltenden Suspension (8) aus dem Querstrom-Filtrationsmodul (2), durch welche eine Untergrenze der Strömungsgeschwindigkeit der Suspension im Querstrom-Filtrationsmodul (2) einstellbar ist, Mitteln (6, 7) zum Abführen des Filtrates (9) von dem Querstrom-Filtrationsmodul (2), durch welche eine Obergrenze des Filtratflusses einstellbar ist, Mitteln (4) zum Unterbrechen des das Querstrom-Filtrationsmodul (2) durchströmenden Suspensionsstromes und Mitteln (3, 4, 5, 6) zum Absprengen und Austragen eines als Partikelschicht (2) auf den mikroporösen Filterflächen des Querstrom-Filtrationsmoduls (1) bei dessen Durchströmung abgelagerten Feingutproduktes, wobei
durch die Mittel (4, 5) zum Zuführen der zu klassierenden Suspension (1) zu dem Querstrom-Filtrationsmodul (2) und zum Abführen der das Grobgut enthaltenden Suspension (8) aus dem Querstrom-Filtrationsmodul (2) eine annähernd konstante Strömungsgeschwindigkeit der Suspension im Querstrom-Filtrationsmodul (2) einstellbar ist, **dadurch gekennzeichnet, daß** durch die Mittel (6, 7) zum Abführen des Filtrates (9) von dem Querstrom-Filtrationsmodul (2) ein annähernd konstanter Filtratfluß einstellbar ist.

17. Vorrichtung nach Anspruch 16,
**dadurch gekennzeichnet,**
**daß** durch die Mittel (4, 5, Fig. 1) zum Zuführen der zu klassierenden Suspension (1, Fig. 1) zu dem Modul (2, Fig. 1) und zum Abführen der das Grobgut enthaltenden Suspension (8, Fig. 1) aus dem Modul (2, Fig. 1 ) die Strömungsgeschwindigkeit der Suspension im Modul (2, Fig. 1 ) indirekt über den Volumenstrom einstellbar ist.

18. Vorrichtung nach einem der Ansprüche 16 oder 17,
**dadurch gekennzeichnet,**
**daß** dem Querstrom-Filtrationsmodul (2, Fig. 1) ein gerader Einlauf mit demselben Innenquerschnitt wandbündig und ohne Vor- oder Rücksprünge beim Übergang vorgeschaltet ist.

19. Vorrichtung nach einem der Ansprüche 16 bis 18,
**dadurch gekennzeichnet,**
**daß** das Querstrom-Filtrationsmodul (2) als mikroporöses Rohr ausgebildet ist, welches in Segmente unterteilt ist, und daß für jedes Segment eine separate Filtratflußregelung über Pumpen mit druckunabhängigem, konstantem Förderstrom oder über Durchflußmesser und automatische Regelventile vorgesehen ist.

## Claims

1. Process of wet classifying of particles in the finest range, where the fine product is deposited as a particle layer (3) on the microporous filter surfaces of a crossflow-filtration module (2) in a first process step at a filtration of the suspension (1), which is to be classified, in a crossflow-filtration module (2) by adjustment of a lower limit of the flow velocity (4,5) of the suspension (1) in the crossflow-filtration module (2) and an upper limit of the filtrate flux (6,7) and the deposited particle layer (3) is gained as fine product by dry or wet backflushing in the second process step, where in the first process step the fine product is deposited by adjustment of an approximately constant flow velocity (4,5) of the suspension (1) in the crossflow-filtration module (2) and **characterised in that** in the first process step the fine product is deposited by adjustment of an approximate constant filtrate flux (6,7).

2. Process according to claim 1, **characterised in that** the flow velocity of the suspension (1) in the module (2) is adjusted indirectly by adjustment of the volume flow (4,5).

3. Process according to one of the above-mentioned claims, **characterised in that** deposited fine product (2) is blasted off the microporous filter surfaces of a backflushable crossflow-filtration module (1) by backflushing (3,4) with filtrate or liquid after interruption of the suspension flow in the second process step and the fine product suspension (7) is discharged with filtrate or other liquid (5).

4. Process according to one of the claims 1 to 2, **characterised in that** deposited fine product (2) is blasted off the vertically arranged microporous filter surfaces of a backflushable crossflow-filtration module (1) by backflushing (3) with compressed air or gas after interruption of the suspension flow and discharge of the suspension from the crossflow-filtration module (1) in the second process step and the blasted off particle layer, if necessary supported by auxiliary devices, drops out of the module downward (4) or is discharged dry from the module.

5. Process according to one of the claims 3 or 4, **characterised in that** in the first process step the suspension flows through one or more crossflow-filtration modules severalfold by revolution in a circular flow, where feed material is continuously added to and coarse product is continuously removed from the suspension circular flow and accrued filtrate or other liquid is added to the suspension flow completely or in part and that in the second process step the fine product is gained after interrupting the suspension flow by means of a deviation through a bypass.

6. Process according to one of the claims 3 or 4, **characterised in that** several crossflow-filtration modules, especially modules with a low flow pressure drop and separate control to maintain the filtrate flux constant, are series-connected and are flowed through by the suspension once or severalfold in a circular flow in the first process step where feed material is continuously added to and coarse product is continuously removed from the suspension circular flow and accrued filtrate or other liquid is added to the suspension flow completely or in part.

7. Process according to claim 6, **characterised in that** the flow velocity in the modules is maintained constant even at filtrate removal by a reduction of the number of flow channels or the flow area of the flow channels in the series-connected modules.

8. Process according to one of the claims 3 or 4, **characterised in that** several crossflow-filtration modules, especially modules with low flow pressure drop and separate control for maintaining constant the filtrate flux, are series-connected to one or more cascades, where the flow velocity in the modules is maintained approximately constant by the cascading and are flowed through by the suspension once or severalfold in a circular flow in the first process step where feed material is continuously added to and coarse product is continuously removed from the suspension circular flow and accrued filtrate or other liquid is added to the suspension flow completely or in part.

9. Process according to one of the above-mentioned claims, **characterised in that** one fraction of the fine product is separated only incompletely from a feed material and/or the fine product yield at incomplete classifying of the feed material is applied as a process of classifying in a grinding-classifying circuit.

10. Process according to one of the above-mentioned claims, **characterised in that** a coarse product fraction is extracted from a feed material by complete or almost complete removal of fine product.

11. Process according to claim 9, **characterised in that** a fine product is gained first and this fine product is then anew classified with a lower cut size, i.e. at higher flow velocity of the suspension in the module or at reduced filtrate flux to extract products with a narrow particle size distribution from a feed material.

12. Process according to one of the above-mentioned claims, **characterised in that** the emerging coarse product suspension flow is concentrated in the first process step by no or only partial recirculation of the filtrate.

13. Process according to one of the above-mentioned claims, **characterised in that** the deposited fine product particle layer is washed with a washing liquid before starting the second process step.

14. Process according to one of the above-mentioned claims, **characterised in that** the flow at the microporous filter surface, which is required for the fine product deposition is accomplished by means of dynamic crossflow-filtration modules with moving machine parts.

15. Process according to one of the above-mentioned claims, **characterised in that** nanofiltration-membranes or ultrafiltration-membranes or microfiltration-membranes or membranes for clarification are installed in the crossflow-filtration module or in the crossflow-filtration modules used for classifying.

16. Gadget to perform a process according to one of the above-mentioned claims, with a crossflow-filtration module (2), devices (4,5) for feeding the crossflow-filtration module (2) with a suspension (1) that is to be classified and for the removal of the coarse product-containing suspension from the crossflow-filtration module, by which a lower limit of the flow velocity of the suspension in the crossflow-filtration module (2) is adjustable, devices (6,7) to remove the filtrate (9) from the crossflow-filtration module, by which an upper limit of the filtrate flux is adjustable, devices (4) to interrupt the suspension flow through the crossflow-filtration module (2) and devices (3,4,5,6) to blast off and discharge a fine product, deposited as particle layer (2) on the microporous filter surfaces of the crossflow-filtration module (1) during being flowed through, where by means of the devices (4,5) for feeding the suspension (1) that is to be classified to the crossflow-filtration module (2) and for the removal of the coarse product-containing suspension from the crossflow-filtration module (2) an almost constant flow velocity of the suspension in the crossflow-filtration module (2) is adjustable, **characterised in that** by means of the devices (6,7) to remove the filtrate (9) from the crossflow-filtration module (2) an approximately constant filtrate flux is adjustable.

17. Device according to claim 16, **characterised in that** by means of the devices (4,5, fig. 1) for feeding the crossflow-filtration module (2, fig. 1) with the suspension (1, fig. 1) that is to be classified and for the removal of the coarse product-containing suspension (8, fig. 1) from the crossflow-filtration module (2, fig. 1) the flow velocity of the suspension in the crossflow-filtration module (2, fig. 1) is adjustable indirectly via the volume flow.

18. Device according to one of the claims 16 or 17, **characterised in that** a plain inlet without forward or backward facing steps in the transition area is connected ahead the crossflow-filtration module (2, fig. 1), having the same inner cross-section.

19. Device according to one of the claims 16 to 18, **characterised in that** the crossflow-filtration module (2) is designed as microporous tube, which is subdivided in segments and that for each segment a separate filtrate flux control by means of pumps, having a pressure-independent, constant delivery rate or by means of flow control units and automatic control valves, is provided.

## Revendications

1. Le procédé de classement par voie humide des particules dans un domaine trés fin, où le produit fin est déposé comme une couche de particule (3), sur les surfaces microporeuses de filtre d'un module de filtration tangentielle (2), dans la première étape de procédé à filtration de suspension (1), qui doit être classifié dans le module de filtration tangentielle (2) par l'ajustement d'une limite inférieure de la vitesse d'écoulement (4.5), de la suspension (1), dans le module de filtration tangentielle (2), et d'une limite supérieure du flux de filtrat (6.7), et la couche de particule (3) déposée est gagné comme un produit fin par une circulation de rinçage inverse sec ou humide dans la deuxième étape de procédé, où dans la première étape de procédé, le produit fin est déposé par l'ajustement d'une vitesse approximativement constante d'écoulement (4.5), de la suspension (1), dans un module de filtration tangentielle (2), et **caractérisé en ce que** dans la première étape de procédé, le produit fin est déposé par l'ajustement d'un flux approximatif constant de filtrat (6.7).

2. Le procédé selon la revendication 1, **caractérisé en ce que** la vitesse d'écoulement de la suspension (1), dans le module (2) est ajusté indirectement par l'ajustement du volume d'écoulement (4.5)

3. Le procédé selon une des revendications mentionnées ci-dessus, **caractérisé par le fait que** le produit fin (2) déposé est décollé du surfaces microporeuses de filtre d'un module en circulation rinçable inverse de filtration (1), par la circulation de rinçage inverse (3.4), avec un filtrat ou un liquide, après interruption d'écoulement de suspension dans la deuxième étape de procédé et la suspension de produit fin (7) est déchargé avec le filtrat ou autre liquide (5).

4. Le procédé selon une des revendications 1 à 2, **caractérisé par le fait que** le produit fin (2) déposé est décollé du surfaces microporeuses verticalement arrangées de filtre d'un module rinçable en circulation inverse de filtration tangentielle (1), par circulation de rinçage inverse (3), avec de l'air ou de gaz comprimé, après l'interruption de l'écoulement de suspension, et la décharge de la suspension du module de filtration tangentielle (1), dans la deuxièmes étape de procédé et la couche de particule décollée, au besoin supporté par des dispositifs auxiliaires, chute hors du module en bas (4) ou est déchargé sec du module.

5. Le procédé selon une des revendications 3 ou 4, **caractérisé en ce que** dans la première étape de procédé, la suspension d'écoulement traverse un ou plusieurs modules de filtration tangentielle, plusieur fois par révolution dans un écoulement circulaire, où le matériel amené est continuelement ajouté, et le produit brut est continuelement enlevé de l'écoulement circulaire de suspension, et le filtrat accru ou tout autre liquide est ajouté à l'écoulement de suspension complètement ou en partie, et celui dans la deuxième étape de procédé, le produit fin est gagné après interruption de l'écoulement de suspension au moyen d'une déviation par une contournement.

6. Le procédé selon une des revendications 3 ou 4, **caractérisé en ce que** plusieurs modules de filtration tangentielle, particulièrement des modules avec une basse chute de pression d'écoulement et une commande séparée, pour maintenir la constante de flux de filtrat, sont connectés en série et traversés par la suspension une fois ou plusieur fois dans un écoulement circulaire, dans la première étape de procédé circulaire, où le matériel amené est continuelement ajouté, et le produit brut est continuelement enlevé de l'écoulement circulaire de suspension, et le filtrat accru ou tout autre liquide est ajouté à l'écoulement de suspension complètement ou en partie.

7. Le procédé selon la revendication 6, **caractérisée en ce que** la vitesse d'écoulement dans les modules est maintenue constante, même au déplacement de filtrat par une réduction du nombre de canaux d'écoulement, ou de la zone des canaux d'écoulement dans les modules connectés en série.

8. Le procédé selon une des revendications 3 ou 4, **caractérisé en ce que** plusieurs modules de filtration tangentielle, particulièrement les modules avec une basse chute de pression d'écoulement et une commande séparée, pour maintenir la constante de flux de filtrat, sont connecté en série à une ou plusieurs cascades, où la vitesse d'écoulement dans les modules est maintenue approximativement constante par la mise en cascade, et sont traversés par la suspension une fois ou plusieur fois dans un écoulement circulaire, dans la première étape de processus, où le matériel amené est continuelement ajouté, et le produit brut est continuelement enlevé de l'écoulement circulaire de suspension, et le filtrat accru ou tout autre liquide est ajouté à l'écoulement de suspension complètement ou en partie.

9. Le procédé selon une des revendications mentionnées ci-dessus, **caractérisé dans ce** qu' une fraction du produit fin est séparé incomplètement seulement du matériel amené, et/ou le rendement de produit fin, à classification incomplète de matériel amené est appliqué comme procédé de classement dans un circuit rectifiant-classifiant.

10. Le procédé selon une des revendications mentionnées ci-dessus, **caractérisé en ce qu'** une fraction de produit brut est extrait à partir du matériel amené, par le déplacement complet ou presque complet du produit fin.

11. Le procédé selon la revendication 9, **caractérisée en ce qu'**un produit fin est gagné d'abord, et ce produit fin est à nouveau classifié avec une taille inférieure de coupe, c'est à dire, à une vitesse plus élevée d'écoulement de la suspension, dans le module ou au flux de filtrat réduit, pour extraire des produits avec une distribution étroite de taille de particule de matériel amené.

12. Le procédé selon une des revendications mentionnées ci-dessus, **caractérisé dans ce que** l'écoulement de suspension de produit naissant brut est concentré dans la première étape de procédé, par ou seulement avec le recyclage partiel du filtrat.

13. Le procédé selon une des revendications mentionnées ci-dessus, **caractérisé dans ce que** la couche de particule de produit fin déposée, est lavé avec un liquide de lavage avant de commencer la deuxième étape de procédé.

14. Le procédé selon une des revendications mentionnées ci-dessus, **caractérisé dans ce que** l'écoulement sur la surface microporeuse de filtre, qui est exigée pour la déposition de produit fin, est accompli au moyen des modules dynamiques de filtration tangentielle, avec les parties mobiles de machine.

15. Le procédé selon une des revendications mentionnées ci-dessus, **caractérisé dans ce que** des nanofiltration-membranes, ou des ultrafiltration-membranes, ou des microfiltration-membranes, ou des membranes pour la clarification, sont installés dans le module de filtration tangentielle, ou dans les modules de filtration tangentielle utilisés pour le classement.

16. Le gadget pour exécuter un procédé selon une des revendications mentionnées ci-dessus, avec un module de filtration tangentielle (2), les dispositifs (4.5) pour amener le module de filtration tangentielle (2), avec la suspension (1) qui doit être classifié, et pour le déplacement de la suspension produit-contenante brut du module de filtration tangentielle, par lequel une limite inférieure de la vitesse d'écoulement de la suspension dans le module de filtration tangentielle (2) est réglable, les dispositifs (6.7) pour enlever le filtrat (9) du module de filtration tangentielle, par lequel une limite supérieure du flux de filtrat est réglable, les dispositifs (4) pour interrompre la suspension d'écoulement traversent le module de filtration tangentielle (2), et les dispositifs (3.4.5.6) pour décoller et décharger un produit fin déposé comme couche de particule (2), sur les surfaces microporeuses de filtre du module de filtration tangentielle (1), pendant être traversé, où au moyen des dispositifs (4.5) pour amener la suspension (1), qui doit être classifié au module de filtration tangentielle (2), et pour le déplacement de la suspension produit-contenante brut du module de filtration tangentielle (2), la vitesse presque constante d'écoulement de la suspension dans le module de filtration tangentielle (2) est réglable, **caractérisé dans ce** qu' au moyen des dispositifs (6.7) pour enlever le filtrat (9) du module de filtration tangentielle (2), le flux de filtrat approximativement constant est réglable.

17. Le dispositif selon la revendication 16, **caractérisée en ce qu'**au moyen des dispositifs (4.5, fig. 1) pour amener le module de filtration tangentielle (2, fig. 1), avec la suspension (1, fig. 1), qui doit être classifié, et pour le déplacement de la suspension produit-contenante brut (8, fig. 1) du module de filtration tangentielle (2, fig. 1), la vitesse d'écoulement de la suspension dans le module de filtration tangentielle (2, fig. 1) est réglable indirectement via le volume d'écoulement.

18. Le dispositif selon une des revendications 16 ou 17, **caractérisé en ce qu'** une admission ordinaire sans étapes avant ou en arrière de revêtement dans le secteur de transition, est connecté en avant le module de filtration tangentielle (2, fig. 1), ayant la même section transversale intérieure.

19. Le dispositif selon une des revendications 16 à 18, **caractérisé en ce que** le module de filtration tangentielle (2) est conçu en tant que tube microporeux, qui est subdivisé dans les segments et celui pour chaque segment, avec commande separate de flux de filtrat au moyen des pompes, ayant un taux pression-indépendant et constant de la livraison, ou au moyen de commande d'écoulement des unités et de contrôle automatique des valves, est fourni.
